# EUROPEAN PATENT APPLICATION

(11) **EP 2 224 702 A1**
(43) Date of publication of application: **01.09.2010**
(21) Application number: 09153812.4
(22) Date of filing: 26.02.2009
(51) Int. Cl.: H04M 1/725, G06F 17/30

(54) **Mobile wireless device to display selected web feeds and associated methods**

(71) Applicant: RESEARCH IN MOTION LIMITED, Waterloo, Ontario N2L 3W8 (CA)
(72) Inventor: Kalu, Kalu, Waterloo Ontario N2L 3W8 (CA); Wormald, Chris, Waterloo Ontario N2V 1K8 (CA); Klassen, Gerhard D., Waterloo Ontario N2L 5Z5 (CA)
(74) Representative: Roberts, Gwilym Vaughan

(57) **Abstract**

A mobile wireless communications device includes a processor cooperating with a wireless transceiver for communicating with a remote server to search a markup language file of at least one web page stored on a remote web server to determine addresses of a plurality of web feeds on the at the least one web page. The processor also cooperates with an input device and a display to display on the display a list of the plurality of web feeds and to generate a list of selected web feeds based upon the input device. Information from the selected web feeds is downloaded using the wireless transceiver and based upon respective addresses of the selected web feeds. The downloaded information from the selected web feeds is displayed on the display.

## Description

### Technical Field

The present disclosure relates to the field of mobile wireless communications devices and, more particularly, to mobile wireless communications devices for displaying web feeds and associated methods.

### Background

The emergence of RSS (Really Simple Syndication) technologies has transformed the World Wide Web into a service platform that competes with traditional media, such as newspapers and magazines, for timely content publication, aggregation, and delivery. RSS is a type of web feed allowing the broadcast, or syndication, of content that is frequently updated, such as blog entries, news headlines, audio, and video, in a standardized format. An RSS document (which is also called a "feed," "web feed," or "channel") includes full or summarized text, plus metadata such as publishing dates and authorship. RSS feeds benefit publishers by letting them syndicate content quickly and automatically. They benefit readers who want to subscribe to timely updates from favored websites.

A standardized XML (Extensible Markup Language) file format allows the information to be published once via an RSS feed and viewed by many different programs. The RSS feed may be subscribed to and viewed with a web browser or a specific web feed reader. The web browser or feed reader checks the user's subscribed feeds regularly, downloads any updates that it finds, and provides a user interface to monitor and read the feeds.

The display of such web feeds on a mobile wireless communications device has become commonplace. Indeed, a user may desire ways to easily synchronize his mobile wireless communications device with his personal computer. For example, a user may desire for his favorite web page links, saved on his personal computer, to be quickly and easily accessible by his mobile wireless communications device. Likewise, a user may desire for his favorite RSS feeds, saved on his personal computer, to be quickly and easily accessible by his mobile wireless communications device.

Attempts at facilitating such easy synchronization between personal computers and mobile wireless communications devices have been made. My Yahoo! Mobile RSS (http://www.ysearchblog.com/archives/000087.html), for example, is a service that provides for synchronization of RSS feeds between a user's personal Yahoo! Page and a user's personal Yahoo! Mobile Page. That is, each RSS feed that appears on a user's personal Yahoo! Page will appear on that user's personal Yahoo! Mobile Page.

Litefeeds (http://www.litefeeds.com/learn more.jsp) is an RSS reader for mobile wireless communications device. A user may export an OPML (Outline Processor Markup Language) file from an RSS reader on his personal computer. This QPML file contains all the RSS feeds subscribed to by the RSS reader on the personal computer. Litefeeds may then import the OPML file, thereby quickly transferring all of the RSS links from the personal computer to the mobile wireless communications device.

U.S. Pat. Pub. 2008/0256443 to Li et al. discloses a system for aggregating and displaying web feeds. The system discloses a mobile wireless device and a feed aggregator server. The feed aggregator server sends a plurality of subscribed RSS feeds to a mobile wireless communications device for display to the user. The mobile wireless communications device has a search module to search the plurality of subscribed feeds for a user selected key word and to display only those subscribed feeds to the user.

Some users may, however, wish for a subset of the RSS feeds subscribed to by a feed reader or other application on their personal computer to be accessible from their mobile wireless communications device. Further, some users may wish to import RSS links from a personal computer" without having to export an OPML file and may with to import RSS links to a mobile wireless communications device without having to import an OPML file.

### Brief Description of the Drawings

FIG. 1 is a schematic block diagram of a mobile wireless communication device in communications with revote servers via a wireless network in accordance with the present invention.

FIGS. 2A and 2B show the generation of a list of selected web feeds by the mobile wireless communications device of FIG. 1.

FIGS. 3A and 3B show the selection of removed web feeds and updating of the list of selected web feeds based thereupon, pursuant to an update schedule, by the mobile wireless communications device of FIG. 1.

FIGS. 4A and 4B show the selection of removed web feeds and updating of the list of selected web feeds based thereupon, pursuant to a manual update activation, by the mobile wireless communications device of FIG. 1.

FIGS. 5A and 5B show the selection of new web feeds and updating of the list of selected web feeds based thereupon, pursuant to an update schedule, by the mobile wireless communications device of FIG. 1.

FIGS. 6A and 6B show the selection of new web feeds and updating of the list of selected web feeds based thereupon, pursuant to a manual update activation, by the mobile wireless communications device of FIG. 1.

FIG. 7 is a flowchart of a method of displaying at least one web feed on a mobile wireless communications device in accordance of the present invention.

Fig. 8 is a schematic block diagram illustrating exemplary components of a mobile wireless communications device in accordance of the present invention.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout.

A mobile wireless communications device may comprise an input device, a display, and a wireless transceiver. A processor may cooperate with the wireless transceiver for communicating with a remote server to search a markup language file of at least one web page stored on the remote web server to determine addresses of a plurality of web feeds on the at the least one web page. The processor may also cooperate with the input device and the display to display on the display a list of the plurality of web feeds, and generate a list of selected web feeds from the plurality thereof based upon the input device. Furthermore, the processor may download information from the selected web feeds using the wireless transceiver and based upon respective addresses of the selected web feeds. The downloaded information from the selected web feeds may be displayed on the display.

The processor may cooperate with the wireless transceiver for communicating with the remote server to search the markup language file of at least one web page stored on the remote web server to determine addresses of new web feeds on the at the least one web page. Furthermore, the processor may cooperate with the wireless transceiver to determine addresses of the new web feeds based upon the input device.

In addition, the processor may also cooperate with the wireless transceiver to determine addresses of the new web feeds based upon an update schedule. The processor may also cooperate with the input device and the display to display on the display a list of the new web feeds and to generate a list of selected new web feeds based upon the input device. The list of selected web feeds may be updated based upon the selected new web feeds.

The processor may also cooperate with the wireless transceiver for communicating with the remote server to search the markup language file of at least one web page stored on the remote web server to determine removed web feeds on the at the least one web page. The removed web feeds may be determined based upon the input device. Additionally or alternatively, the removed web feeds may be determined based upon an update schedule.

The processor may also cooperate with the input device and the display to display on the display a list of the removed web feeds and to generate a list of selected removed web feeds based upon the input device. The list of selected web feeds may be updated based upon the selected removed web feeds. The markup language file may comprise at least one of an XML file and an HTML file.

A method aspect is directed to a method of displaying at least one web feed on a mobile wireless communications device comprising a wireless transceiver, a display, and an input device is now described. The method may comprise searching a markup language file of at least one web page stored on a remote web server using the wireless transceiver to determine addresses of a plurality of web feeds on the at the least one web page. A list of the plurality of web feeds may be displayed on the display. A list of selected web feeds may be generated from the plurality thereof based upon the input device. Information from the selected web feeds may be downloaded using the wireless transceiver and based upon respective addresses of the selected web feeds. The downloaded information from the selected web feeds may be displayed on the display.

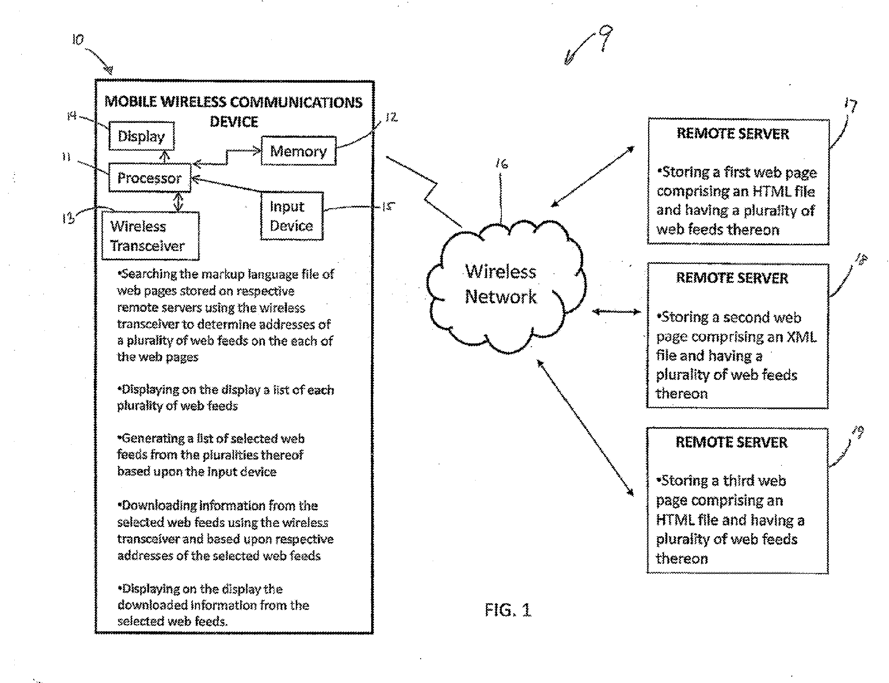

With reference to FIGS. 1-2B, communications system **9** and a mobile wireless communications device **10** to display at least one web feed is now described. The system **9** includes a wireless network **16,** that may typically be provided by a cellular telephone network. The mobile wireless communications device **10** comprises a processor **11,** a memory **12,** a wireless transceiver **13,** a display **14,** and an input device **15.** The input device **15** may be a keyboard, for example. The input device **15** may also be a microphone or a wireless receiver, as will be appreciated by those of skill in the art. Of course, the display **14** may be a touch sensitive screen and may therefore also serve as the input device **15.** In addition, the mobile wireless communications device **10** may include a portable housing and a rechargeable battery (not shown).

The processor **11** cooperates with the memory **12** and the wireless transceiver **13** for communicating with remote servers **17, 18, 19.** It should of course be understood that rather than a plurality of remote servers **17, 18, 19** there may be a single remote server. Furthermore, it should be noted that each remote server **17, 18, 19** may store any number of web pages.

The remote servers **17, 18, 19** store first, second, and third web pages, respectively, in the illustrated embodiment. The first and third web pages comprise HTML files and have a plurality of web feeds thereon. Similarly, the second web page comprises a XML file and has a plurality of web feeds therein.

The processor **11** cooperates with the memory **12** and the wireless transceiver **13** for searching the respective markup language file of the first, second, and third web pages stored on the respective remote servers **17, 18, 19** to determine addresses of a plurality of web feeds on the first, second, and third web pages. These web feeds may be RSS (Really Simple Syndication) feeds or Atom feeds, for example, and may link to web pages, video files, audio files, or any suitable media.

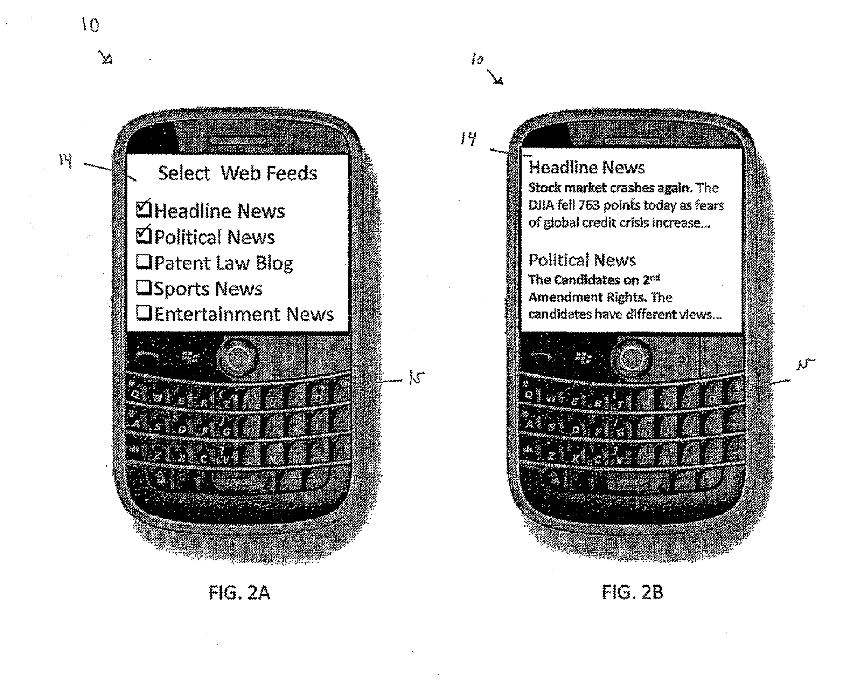

The processor **11** also cooperates with the input device **15** and the display **14** to display on the display a list of the plurality of web feeds. As shown in FIG. 2A-2B, the mobile wireless device **10** has searched the markup language files of the first, second, and third web pages and is displaying a list of the feeds therefrom to the user. The feeds are illustratively "Headline News," "Political News," "Patent Law Blog," "Sports News," and "Entertainment News." The user is prompted to "Select Web Feeds," (FIG. 2A).

A list of selected web feeds is generated from the plurality thereof based upon the input device **15.** Here, the list of selected web feeds includes "Headline News" and "Political News." The user has selected these feeds using the input device **15** and such selections are illustratively indicated by a check mark. Information from the selected web feeds is downloaded using the wireless transceiver **13** based upon respective addresses of the selected web feeds. The downloaded information from the selected web feeds is then displayed on the display **14**, As shown in FIG. 2B, "Headline News" and "Political News" were selected by the user and are displayed on the display **14.** The mobile wireless communications device **10** has therefore been quickly and easily configured to import web feeds from web sites.

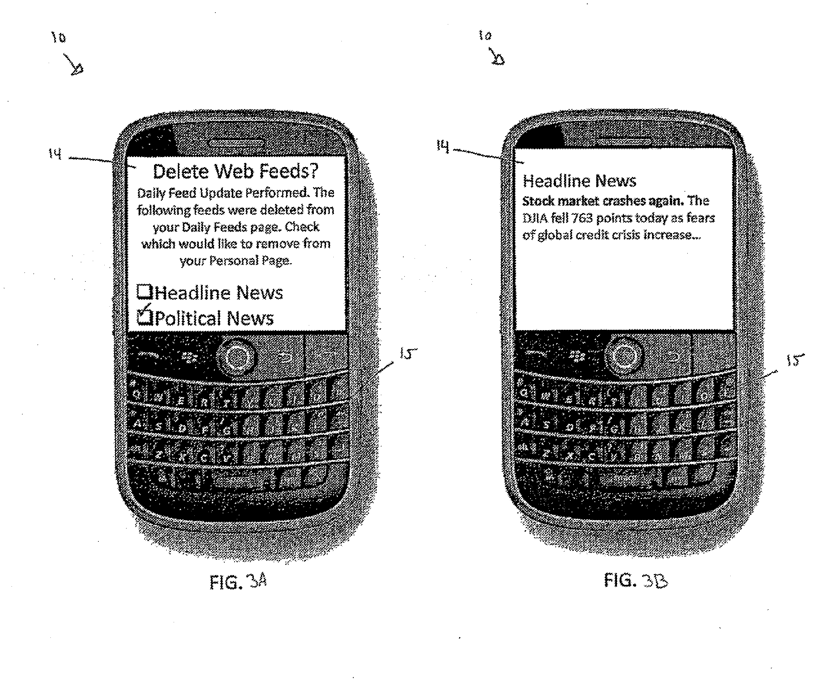

Referring additionally to FIGS. 3A-3B, the processor **11** also illustratively cooperates with the wireless transceiver **13** for communicating with the remote servers **17, 18, 19** to search the markup language files of the first, second, and third web pages stored thereon to determine removed web feeds from the first, second, and third web pages, respectively. To determine removed web feeds, the processor **11** may compare the addresses of the feeds on the first, second, and third web pages to addresses of feeds stored in the memory **12.** If a feed stored in the memory **12** is no longer on one of the first, second, and third web pages, the processor **11** may consider it removed. For further accuracy, when the addresses of web feeds are stored in the memory **12,** the web page the address of each web feed was determined from may be associated with that web feed, This feature may advantageously allow a user to synchronize web feeds between a web page and the mobile wireless communications device **10**.

The processor **11** may also cooperate with the wireless transceiver **13** to determine removed feeds based upon an update schedule. That is, the mobile wireless communications device **10** may check the first, second, and third web pages for removed feeds at scheduled times. Of course, the schedule may be user selected and each of the first, second, and third web pages need not be checked. Furthermore, each of the first, second, and third web pages may be scheduled to be checked at separate times.

As illustrated in FIG. 3A, the display **14** is prompting the user to "Delete web Feeds? Daily Feed Update Performed. The following feeds were deleted from your Daily Feeds Page. Check which you would like to remove from your personal page." In this example, the mobile wireless communications device **10** has performed a daily check of the markup language file of a web page called "Daily Feeds Page" for feeds removed therefrom.

The display **14** is showing the list of feeds removed from the Daily Feeds page, "Headline News," and "Political News." The user has illustratively chosen "Political News" which is now no longer displayed. Rather, only the "Headline News" is displayed on the display **14** (FIG. 3B).

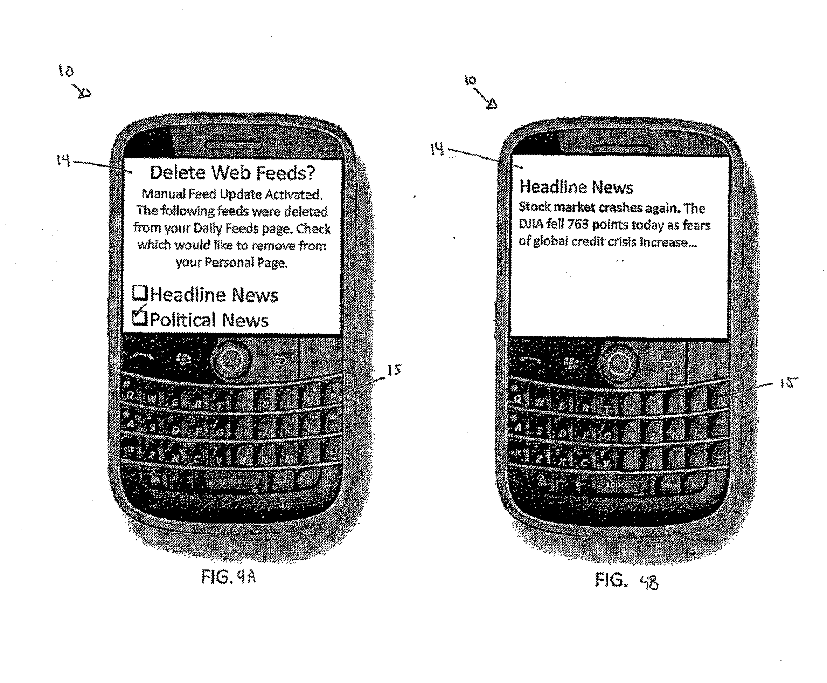

Referring now additionally to FIGS. 4A-4B, additionally or alternatively, the processor **11** may determine removed web feeds based upon input from the input device **15.** That is, the user may prompt the mobile wireless communications device **10** to search the first, second, and third web pages to determine web feeds removed therefrom. Of course, the user may instead prompt the mobile wireless communications device **10** to search the each of the web pages separately,

Here, the display **14** in FIG. 4A is prompting the user to "Delete Web Feeds? Manual Feed Update Activated. The following feeds were deleted from your Daily Feeds Page. Check which you would like to remove from your personal page." In this example, the mobile wireless communications device **10** has, in response to user input, performed a check of the markup language file of a web page called "Daily Feeds Page" for feeds removed therefrom. FIG. 4B shows the web feed.

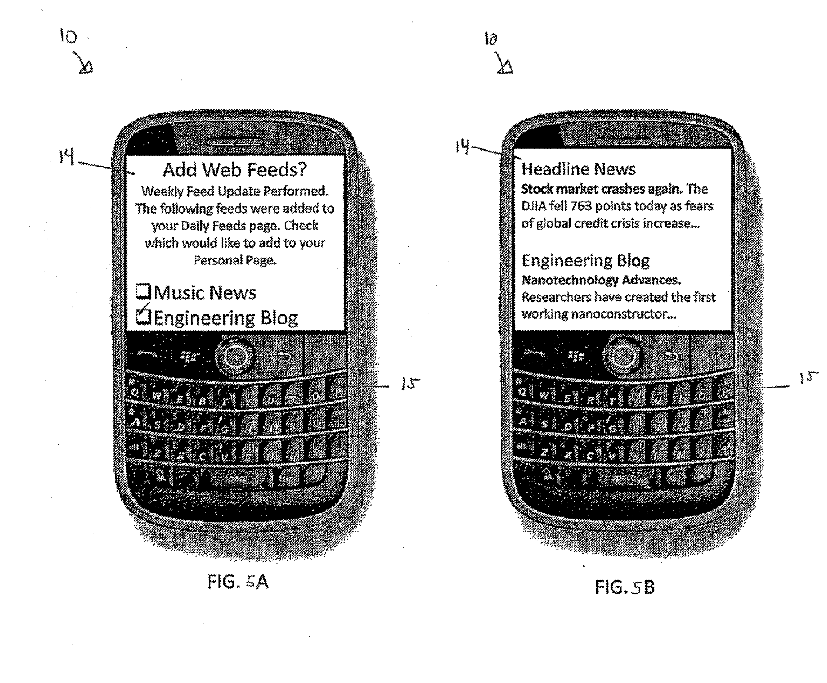

As explained with additional reference to FIGS. 5A-5B, the processor **11** also cooperates with the wireless transceiver **13** for communicating with the remote servers **17, 18, 19** to search the markup language files of the first, second, and third web pages stored thereon to determine addresses of new web feeds on the first, second, and third web pages, respectively.

The processor **11** may also cooperate with the wireless transceiver **13** to determine addresses of the new web feeds based upon an update schedule. That is, the mobile wireless communications device **10** may check the first, second, and third web pages for new feeds at scheduled times. Of course, the schedule may be user selected and each of the first, second, and third web pages need not be checked. Furthermore, each of the first, second, and third web pages may be scheduled to be checked at separate times.

The processor **11** also cooperates with the input device **15** and the display **14** to display on the display a list of the new web feeds and to generate a list of selected new web feeds based upon the input device. The list of selected web feeds is then updated based upon the selected new web feeds.

As illustrated in Fig. 5A, the display **14** is prompting the user to "Add Web Feeds? Weekly Feed Update Performed. The following feeds were added to your Daily Feeds Page. Check which you would like to add to your personal page." In this example, the mobile wireless communications device **10** has performed a weekly check of the markup language file of a web page called "Daily Feeds Page" for addresses of new feeds added thereto.

The display **14** is showing the list of new feeds found on the Daily Feeds page, "Music News," and "Engineering Blog." The has illustratively chosen the "Engineering Blog," and the "Engineering Blog" and now displayed together with "Headline News," (FIG. 5B).

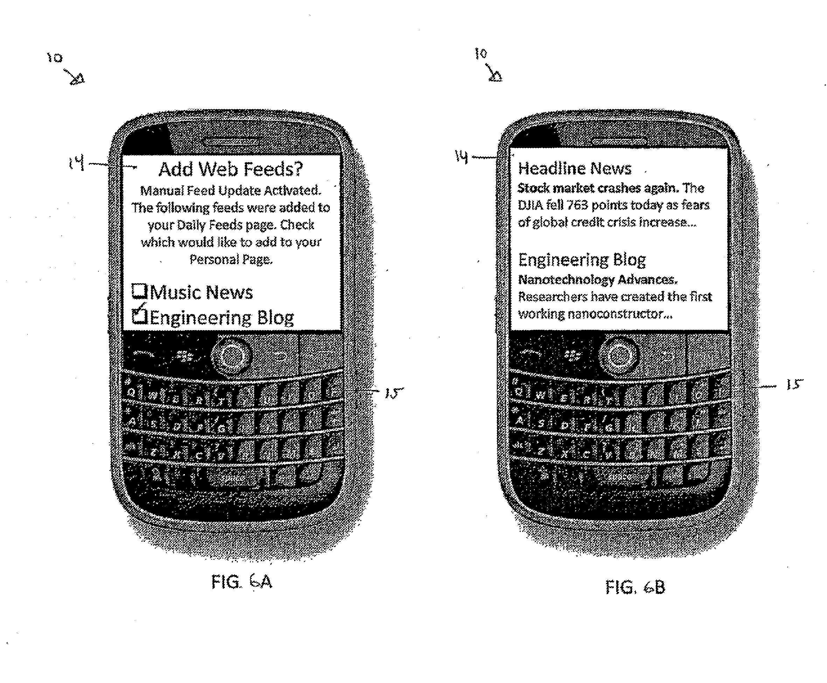

Referring now to FIGS. 6A-6B, the processor **11** may determine addresses of the new web feeds based upon input from the input device **15**. That is, the user may prompt the mobile wireless communications device **10** to search the markup language files of the first, second, and third web pages to determine address of new web feeds added thereto. Of course, the user may instead prompt the mobile wireless communications device **10** to search the markup language files of each of the web pages separately.

As shown in FIG. 6A, the display **14** is prompting the user to "Add Web Feeds? Manual Feed Update Activated. The following feeds were added to your Daily Feeds Page. Check which you would like to add to your personal page." In this example, the mobile wireless communications device **10** has, in response to user input, performed a check of the markup language file of a web page called "Daily Feeds Page" for feeds added thereto.

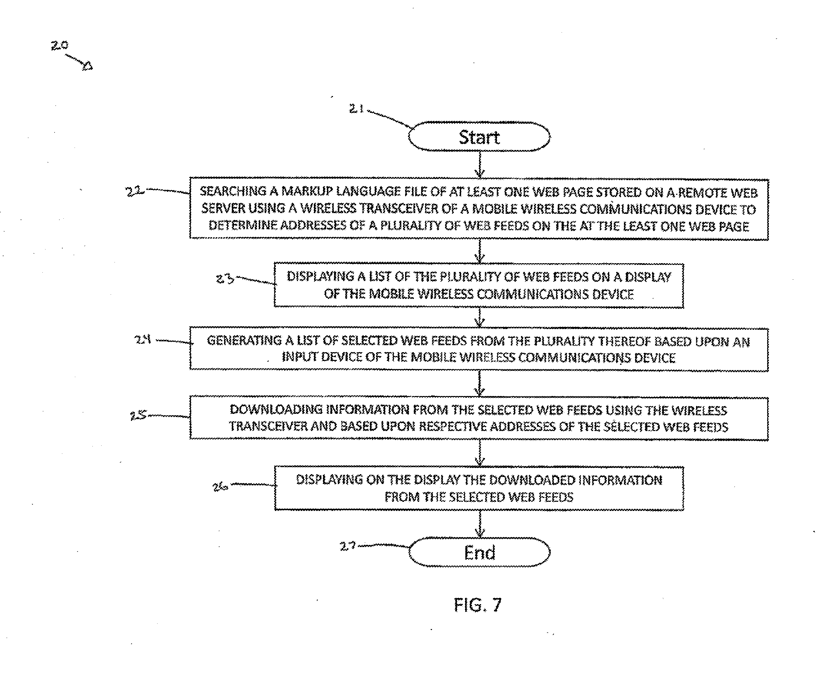

A method aspect is now described with reference to flowchart **20** of FIG. 7. After the start (Block **21**), at Block **22**, a markup language file of at least one web page stored on a remote web server is searched using a wireless transceiver of a mobile wireless communications device to determine addresses of a plurality of web feeds on the at least one web page. At Block **23**, a list of the plurality of web feeds is displayed on a display of the mobile wireless communications device.

At Block **24**, a list of selected web feeds is generated from the plurality thereof based upon an input device of the mobile wireless communications device. At Block **25**, information from the selected web feeds is downloaded using the wireless transceiver and based upon respective addresses of the selected web feeds.

At Block **26**, the downloaded information from the selected web feeds is displayed on the display. Block **27** indicates the end of the method.

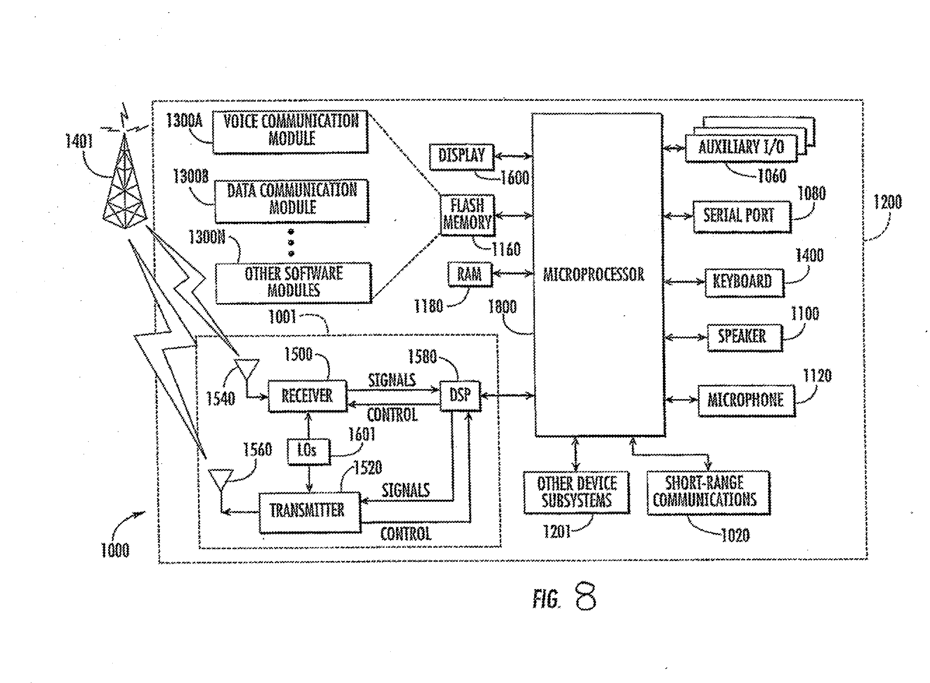

Exemplary components of a hand-held mobile wireless communications device **1000** that may be used in accordance with the present invention are further described in the example below with reference to FIG. 8. The device **1000** illustratively includes a housing **1200**, a keypad **1400** and an output device **1600**. The output device shown is a display **1600**, which may comprise a full graphic LCD. In some embodiments, display **1600** may comprise a touch-sensitive input and output device. Other types of output devices may alternatively be utilized. A processing device **1800** is contained within the housing **1200** and is coupled between the keypad **1400** and the display **1600**. The processing device **1800** controls the operation of the display **1600**, as well as the overall operation of the mobile device **1000**, in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures). The keypad **1400** may include a mode selection key, or other hardware or software for switching between text entry and telephony entry.

In addition to the processing device **1800**, other parts of the mobile device **1000** are shown schematically in FIG. 8. These include a communications subsystem **1001**; a short-range communications subsystem **1020**; the keypad **1400** and the display **1600**, along with other input/output devices **1060**, **1080**, **1100** and **1120**; as well as memory devices **1160, 1180** and various other device subsystems **1201**. The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800**, in addition to its operating system functions, enables execution of software applications **1300A-1300N** on the device **1000**. A predetermined set of applications that control basic device operations, such as data and voice communications **1300A** and **1300B,** may be installed on the device **1000** during manufacture. In addition, a personal information manager (PIM) application may be installed during manufacture. The PIN may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with the device user's corresponding data items stored or associated with a host computer system.

Communication functions, including data and voice communications, are performed through the communications subsystem **1001**, and possibly through the short-range communications subsystem. The communications subsystem **1001** includes a receiver **1500**, a transmitter **1520,** and one or more antennas **1540** and **1560**. In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, track ball, or some other type of input device. The composed data items may then be transmitted over the communications network **1401** via the communications subsystem **1001**.

In a voice communications mode, overall operation of the device is substantially similar to the data communications mode, except that received signals are output to a speaker **1100**, and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth^{™} communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A mobile wireless communications device (10) comprising:
an input device (15);
a display (14);
a wireless transceiver (13); and
a processor (11) cooperating with said wireless transceiver for communicating with a remote server (17, 18, 19) to search a markup language file of at least one web page stored on the remote web server to determine addresses of a plurality of web feeds on the at the least one web page;
said processor also cooperating with said input device and said display to
display on said display a list of the plurality of web feeds,
generate a list of selected web feeds from the plurality thereof based upon said input device,
download information from the selected web feeds using said wireless transceiver and based upon respective addresses of the selected web feeds, and
display on said display the downloaded information from the selected web feeds.

2. The mobile wireless communications device (10) of Claim 1 wherein said processor (11) also cooperates with said wireless transceiver (13) for communicating with the remote server (17, 18, 19) to search the markup language file of the at least one web page stored on the remote web server to determine addresses of new web feeds on the at the least one web page.

3. The mobile wireless communications device (10) of Claim 2 wherein said processor (11) also cooperates with said wireless transceiver (13) to determine addresses of the new web feeds based upon said input device (15).

4. The mobile wireless communications device (10) of Claim 2 wherein said processor (11) also cooperates with said wireless transceiver (13) to determine addresses of the new web feeds based upon an update schedule.

5. The mobile wireless communications device (10) of Claim 2 wherein said processor (11) also cooperates with said input device (15) and said display (14) to
display on said display a list of the new web feeds;
generate a list of selected new web feeds based upon said input device; and
update the list of selected web feeds based upon the selected new web feeds.

6. The mobile wireless communications device (10) of Claim 1 wherein said processor (11) also cooperates with said wireless transceiver (13) for communicating with the remote server (17, 18, 19) to search the markup language file of the at least one web page stored on the remote web server to determine removed web feeds on the at the least one web page.

7. The mobile wireless communications device (10) of Claim 6 wherein said processor (11) also cooperates with said wireless transceiver (13) to determine the removed web feeds based upon said input device (15).

8. The mobile wireless communications device (10) of Claim 6 wherein said processor (11) also cooperates with said wireless transceiver (13) to determine the removed web feeds based upon an update schedule.

9. The mobile wireless communications device (10) of Claim 6 wherein said processor (11) also cooperates with said input device (15) and said display (14) to
display on said display a list of the removed web feeds;
generate a list of selected removed web feeds based upon said input device; and
update the list of selected web feeds based upon the selected removed web feeds.

10. The mobile wireless communications device (10) of Claim 1 wherein the markup language file comprises at least one of an XML file and an HTML file.

11. A method of displaying at least one web feed on a mobile wireless communications device (10) comprising a wireless transceiver (13), a display (14), and an input device (15), the method comprising:
searching a markup language file of at least one web page stored on a remote web server using the wireless transceiver to determine addresses of a plurality of web feeds on the at the least one web page;
displaying a list of the plurality of web feeds on the display;
generating a list of selected web feeds from the plurality thereof based upon the input device;
downloading information from the selected web feeds using the wireless transceiver and based upon respective addresses of the selected web feeds; and
displaying on the display the downloaded information from the selected web feeds.

12. The method of Claim 11 further comprising communicating with the remote server (17, 18, 19) to search the markup language file of at least one web page stored on the remote web server to determine addresses of new web feeds on the at the least one web page.

13. The method of Claim 12 wherein addresses of the new web feeds are determined based upon the input device (15).

14. The method of Claim 12 addresses of the new web feeds are determined based upon an update schedule.

15. The method of Claim 12 further comprising:
displaying on the display (14) a list of the new web feeds;
generating a list of selected new web feeds based upon the input device (15); and
updating the list of selected web feeds based upon the selected new web feeds.
